# EUROPEAN PATENT SPECIFICATION

(11) **EP 1 223 075 B1**
(45) Date of publication and mention of the grant of the patent: **06.02.2008**
(21) Application number: 01000745.8
(22) Date of filing: 12.12.2001
(51) Int. Cl.: B60N 2/30

(54) **Automotive seat with height adjustable seat cushion**
Kraftfahrzeugsitz mit einem höhenverstellbaren Sitzkissen
Siège de véhicule automobile à assise réglable en hauteur

(30) Priority: 05.01.2001 US 755928
(43) Date of publication of application: 17.07.2002
(73) Proprietor: Ford Global Technologies, LLC, Dearborn, MI 48126 (US)
(72) Inventor: Pehrson, Hans, Olof, 423 39 Forslanda (SE)
(74) Representative: Messulam, Alec Moses

(56) References cited:
- EP-A- 0 666 194
- EP-A- 0 689 955
- EP-A- 0 705 728
- EP-A- 0 827 863
- DE-A- 4 412 617
- GB-A- 2 146 895
- US-A- 5 685 603
- US-A- 6 113 185
- PATENT ABSTRACTS OF JAPAN vol. 1998, no. 05, 30 April 1998 (1998-04-30) -& JP 10 016617 A (ARACO CORP), 20 January 1998 (1998-01-20)

## Description

The present invention relates generally to an adjustable height automotive seat and more particularly to an adjustable height automotive seat with improved safety characteristics for accommodating variably-sized occupants.

Automotive designers have discovered that the "one size fits all" mentality of traditional automotive design is no longer acceptable to many consumers. Design considerations, once dictated by a fictitious average-sized male, now must be flexible to accommodate a wider variety of body shapes and sizes. Although safety issues such as airbags, and other restraints, may have helped bring the issue of varied occupant size to the forefront, occupant comfort and convenience have helped drive improvements as well.

One aspect of automotive design that requires improvement is an automotive seat design to accommodate varying occupant size passengers.

Automotive seats are often designed to accommodate an average-sized male occupant. In reality, the occupants using such a seat may be non-average males, women, and children. Such alternate occupants are often of differing height and size to an average male. When such an alternate occupant is seated in an automotive seat designed for an average adult male, several disadvantages may be realised.

One known disadvantage occurs primarily in automotive seats positioned within the rear of the vehicle. Often, occupants of smaller stature, when positioned in these seats, do not have clear lines of sight out of the vehicle's windows or to other vehicle passengers. This can serve to isolate these smaller stature occupants, reduce their enjoyment, and may even reduce family and communal experiences by hampering communication.

In addition, smaller stature occupants can also be disadvantaged with regards to safety and comfort. Typical automotive seat design often does not allow such occupants proper leg and foot support. Often a smaller occupant cannot bend his or her legs and rest their feet comfortably on the floor. Of even more importance, current automotive seat design and corresponding safety belt design can result in submarining of smaller occupants during collisions. This can potentially result in a greater risk for physical injury during collision which is highly undesirable.

Adjustable height child seats in JP10016617, EP0666194 and EP0827863 include parallelogram-type linkages connected to the base of the seat frame. In EP0705728, a child seat is mounted to an adult seat back for vertical movement by a motor-driven pulley and rod arrangement. US6113185 and GB2146895 both describe anti-submarine tubular cross members in a child seat. EP0689955 describes a fold-down child seat using a plastically deformable plate mounting to absorb impact energy in case of collision and US5685603 describes a child seat mounted for forward movement on a carriage provided with a mechanism to absorb frontal impact energy. Finally, US3578376 and US3724603 disclose vehicle seats mounted at their rear to a floor of the vehicle for pivotal movement such that the front of the seat pivots upwardly in the event of a rear-end collision, the movement being damped by an energy-absorbing device connected to the seat and designed to extend lengthwise plastically as the seat moves.

It is, therefore, an object and an advantage of the present invention to provide an adjustable height automotive seat that improves safety and the travel experience of small occupants within the vehicle.

According to the invention there is provided an adjustable height automotive seat comprising a backrest portion and a seat portion vertically adjustable in relation to said backrest portion, with at least one one-way collapsible bracket, said bracket adapted to mount the seat to an automotive vehicle, said bracket having lesser compressive than tensile strength in order to facilitate energy absorption by said bracket during rear direction travel (64) of said seat (10) in a rear end collision with said vehicle while retaining strength to prevent said seat from moving forward (62) during a front-end collision with said vehicle.

Advantageously, the seat portion may comprise a rear portion and a front portion rotatably attached to said rear portion wherein the front portion is rotatable down from a normal position in which it is aligned with the rear portion to a folded position.

The adjustable height automotive seat may further comprise a moveable foot rest.

The adjustable height automotive seat may further comprise a safety restraint element.

Preferably, the safety restraint element is retractable into an upper portion of said backrest portion.

The adjustable height automotive seat may further comprise at least one submarine protection element.

The at least one submarine protection element may comprise a submarine tube element positioned within the seat portion.

The at least one one-way collapsible bracket may be formed with a plurality of openings in a body portion thereof, whereby to provide the lesser compressive than tensile strength.

The seat portion may have a vertical displacement range of at least 50 mm.

The seat may further comprise a rotatable threaded portion in communication with the seat portion, whereby rotation of the threaded portion causes vertical displacement of the seat portion.

The invention will now be described by way of example with reference to the accompanying drawing of which:-
FIGURE 1 is an illustration of an embodiment of an adjustable height automotive seat in accordance with the present invention;
FIGURE 2 is an illustration of an embodiment of the mechanical substructure for use in the adjustable automotive seat as shown in Figure 1;
FIGURE 3 is an embodiment of an adjustable height automotive seat in accordance with the present invention detailing comfort and safety features;
FIGURE 4 is an alternate embodiment of an adjustable height automotive seat in accordance with the present invention detailing additional comfort features;
FIGURE 5 is an illustration of an embodiment of an adjustable height automotive seat in accordance with the present invention detailing convenience features; and
FIGURE 6 is an illustration of an embodiment of the mechanical substructure for use in an adjustable height automotive seat in accordance with the present invention.

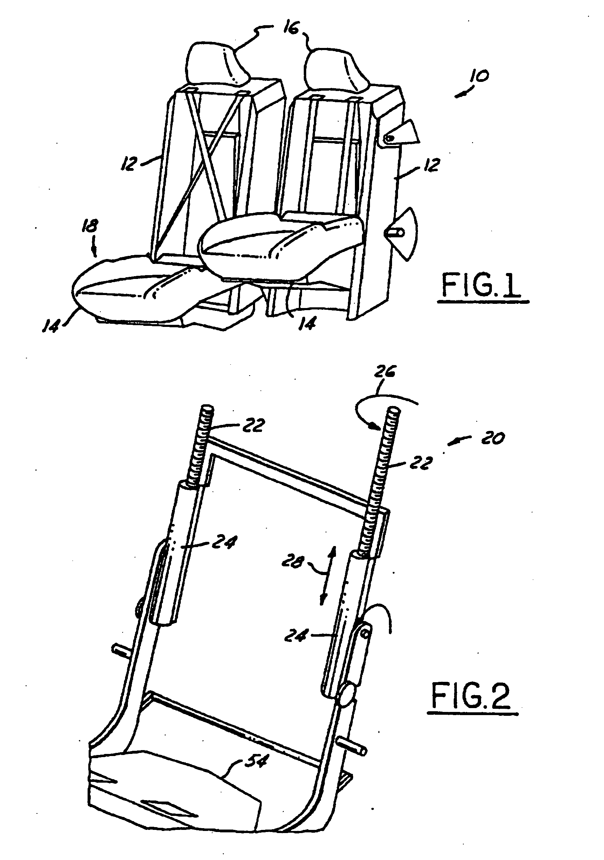

Referring now to Figure 1 the adjustable height automotive seat 10 is intended for use as rear seating in an automobile, although the invention is equally applicable to front seating and non-automotive seating.

The adjustable height automotive seat 10 includes a backrest portion 12 and a seat portion 14. The seat portion 14 is vertically adjustable in relation to the backrest portion 12 in order to accommodate smaller vehicle occupants.

By vertically adjusting the seat portion 14, smaller occupants can be provided with an improved line of sight outside the vehicle, improved eye contact with other vehicle occupants, and the opportunity to utilize normal automotive features, such as a headrest 16.

In one embodiment, the seat portion 14 has a vertical displacement range of at least 50 mm from its base position 18. In another embodiment, the seat portion 14 is intended to have a vertical displacement range of at least 200 mm from its base position 18. Although two vertical displacement ranges have been described, it should be understood that a wide variety of vertical displacement ranges are contemplated.

It is contemplated that the seat portion 14 may be raised and lowered to a variety of means both automated and non-automated. In one embodiment, illustrated in Figure 2, a mechanical infrastructure 20, used to raise and lower the seat portion 14, includes a threaded portion 22 and a receiving portion 24. By rotating 26 the threaded portion 22, the receiving portion 24, which is mechanically attached to the seat portion 14, can travel in an approximately vertical direction 28 and thereby control the seat portion 14 position.

This process can be automated or can be via a manual adjustment.

It should be understood that the mechanical substructure 20 is provided only for illustrative purposes, and that a wide variety of structures capable of raising and lowering the seat portion 14 are known in the art.

Although raising and lowering of the seat portion 14 provides greater accommodation to the varying sizes of occupants, additional improvements may be included in the present invention in order to further improve the comfort and safety of vehicle occupants.

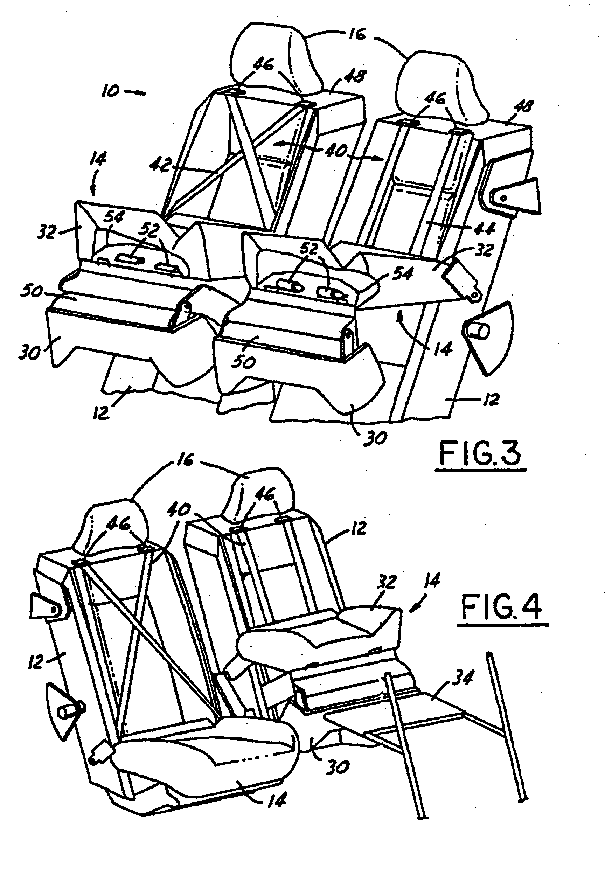

One such additional improvement includes creating a seat portion 14 with a front portion 30 and a rear portion 32. The front portion 30 is rotatably attached to the rear portion 32 such that the front portion 30 may be folded down and the rear portion 32 can then provide a more comfortable seating position for occupants, such as children, with short leg spans. In another embodiment, the adjustable height of the automotive seat 10 may further include an adjustable foot rest 34 (see Figure 4) to further improve the comfort of smaller occupants.

Although comfort is an important aspect of automotive seat design, it should not eclipse safety concerns. The adjustable height automotive seat 10 therefore includes one or more safety restraints 40.

The safety restraint 40 may take on a variety of known configurations, such as a crisscross four point seatbelt 42 or a suspender four point seatbelt 44 as two examples. No matter what form the safety restraints 40 take, it is contemplated that such safety restraints 40 have upper straps which retract through guides 46 positioned on an upper portion 48 of the backrest portion 12.

In this fashion, the safety restraints 40 are kept in proper geometry with respect to the occupant throughout all positions of the seat portion 14. By retracting safety restraints 40 into the backrest member 14, the seatbelt geometry automatically adapts as the seat portion 14 is moved. This increases both occupant convenience and comfort.

In an alternate embodiment the guides 46 may be positioned closer inboard to each other to help prevent the safety restraints 40 from slipping off a child's shoulder.

In combination with the safety restraints 40 other safety features may be used and in particular features designed to reduce submarining.

Submarining is often experienced by children during collisions and happens when during a collision an occupant slides down and under the lap portion of the safety restraints 40.

This is a dangerous condition that can put an occupant at risk and the seat 10 contains several elements for reducing submarining.

The first of these elements is a submarine protection tube 50 positioned within the front portion 30 of the seat portion 14. The submarine protection tube 50 provides some rigidity to the seat portion 14 to help reduce the sinking of an occupant during collision when the front portion 30 is folded up.

When the front portion 30 is folded down pop up protectors 52 are used to supply the necessary rigidity to the rear portion 32 to reduce submarining.

Furthermore, a sheet metal base 54 or anti-submarining pan is used to provide support and reduce submarining.

Although specific examples of anti-submarining elements 50, 52, 54 have been described, it should be understood that a wide variety of elements are known that can be used to prevent or reduce submarining.

The safety feature according to the invention is the use of at least one-way collapsible bracket 60 to mount the adjustable height automobile seat 10 to the automobile (not shown) .

One-way collapsible brackets 60 are useful in providing the structural rigidity necessary to secure the mechanical substructure 20 and thereby prevent the movable adjustable height automotive seat 10, from moving forward 62 during front end collisions. Such one-way collapsible brackets 60 also allow energy to be absorbed by collapsing during rear directional travel 64 during rear end collisions.

The ability to absorb energy during rear end collisions helps reduce whiplash and other associated injuries.

Although a variety of one-way collapsible brackets 60 can be used, the one-way collapsible brackets 60 used in this example include gap portions 66 formed within the bracket that reduce the bracket's compressive strength while retaining its tensile strength.

Although one embodiment of a one-way collapsible bracket 60 has been described, it should be understood that a wide variety of one-way collapsible brackets are contemplated by the present invention.

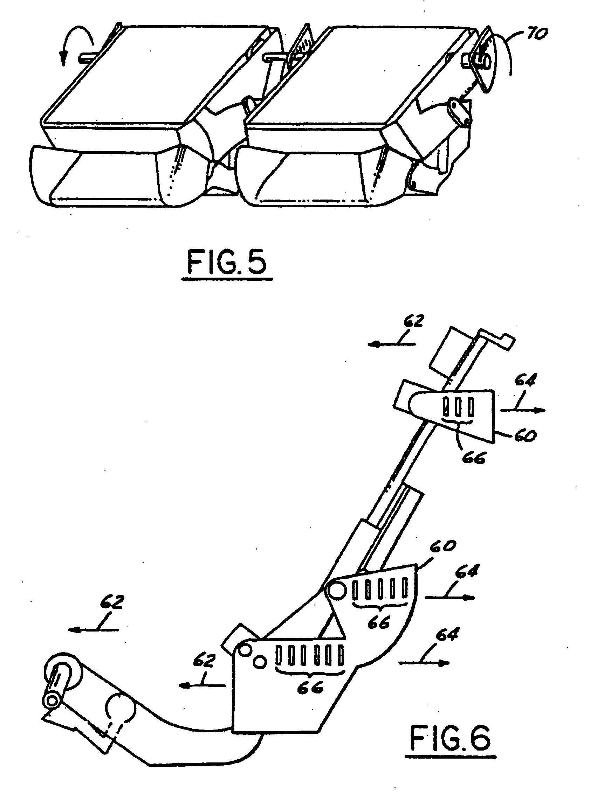

In addition to the novel convenience, comfort, and safety features introduced by the present invention, it is contemplated that traditional convenience and comfort features known and used in the prior art may be incorporated into the present invention to further enhance its desirability. One such convenience feature is a fold down feature 70 (see Figure 5). Fold down features 70 are well-known features for increasing storage capacity when the seat is not in use. It is contemplated that the flip-down feature, as well as a wide variety of other conveniences known in the prior art may be incorporated to further improve the present invention.

While the invention has been described in connection with one or more embodiments, it is to be understood that the specific mechanisms and techniques which have been described are merely illustrative of the principles of the invention, numerous modifications may be made to the methods and apparatus described without departing from the scope of the invention as defined by the appended claims.

## Claims

1. An adjustable height automotive seat (10) comprising a backrest portion (12) and a seat portion (14) vertically adjustable in relation to said backrest portion (12), with at least one one-way collapsible bracket (60), said bracket adapted to mount the seat (10) to an automotive vehicle, said bracket having lesser compressive than tensile strength in order to facilitate energy absorption by said bracket during rear direction travel (64) of said seat (10) in a rear end collision with said vehicle while retaining strength to prevent said seat from moving forward (62) during a front-end collision with said vehicle.

2. An adjustable height automotive seat as claimed in claim 1 wherein the seat portion (14) comprises a rear portion (32) and a front portion (34) rotatably attached to said rear portion (32) wherein the front portion (34) is rotatable down from a normal position, in which it is aligned with the rear portion (32), to a folded position.

3. An adjustable height automotive seat as claimed in claim 1 or in claim 2 further comprising a moveable foot rest (34).

4. An adjustable height automotive seat as claimed in any of claims 1 to 3 further comprising a safety restraint element (40).

5. An adjustable height automotive seat as claimed in claim 4 wherein the safety restraint element (40) is retractable into an upper portion (48) of said backrest portion (12).

6. An adjustable height automotive seat as claimed in any of claims 1 to 5 further comprising at least one submarine protection element (50, 52, 54).

7. An adjustable height automotive seat as claimed in claim 6 wherein the at least one submarine protection element comprises a submarine tube element (50) positioned within the seat portion (14).

8. An adjustable height automotive seat as claimed in any of claims 1 to 7 wherein said at least one one-way collapsible bracket (60) is formed with a plurality of openings (66) in a body portion thereof, whereby to provide the lesser compressive than tensile strength.

9. An adjustable height automotive seat as claimed in any of claims 1 to 8 wherein the seat portion (14) has a vertical displacement range of at least 50 mm.

10. An adjustable height automotive seat as claimed in any of the preceding claims, further comprising a rotatable threaded portion (22) in communication (24) with said seat portion (14), whereby rotation of said threaded portion (22) causes vertical displacement of said seat portion (14).

## Patentansprüche

1. Ein Kraftfahrzeugsitz (10) einstellbarer Höhe, der einen Rückenlehnenabschnitt (12) umfaßt, und einen im Verhältnis zu diesem Rückenlehnenabschnitt (12) vertikal einstellbaren Sitzabschnitt (14) mit mindestens einer in eine Richtung zusammenklappbaren Klammer oder Lasche (60), wobei diese Klammer angepaßt ist um den Sitz (10) an ein Kraftfahrzeug zu montieren, und diese Klammer weniger Druck- als Zugfestigkeit aufweist, um die Energieabsorption durch diese Klammer während der Rückwärtsbewegung (64) dieses Sitzes (10) in einer Heckkollision mit diesem Fahrzeug zu erleichtern, während sie ihre Festigkeit während einer Frontkollision mit diesem Fahrzeug bewahrt, um diesen Sitz daran zu hindern sich vorwärts (62) zu bewegen.

2. Ein Kraftfahrzeugsitz einstellbarer Höhe wie in Anspruch 1 beansprucht, in dem dieser Sitzabschnitt (14) einen hinteren Abschnitt (32) und einen vorderen Abschnitt (34) umfaßt, der drehbar an diesem hinteren Abschnitt (32) angebracht ist, wobei dieser vordere Abschnitt (34) von einer normalen Stellung, in welcher er mit dem hinteren Abschnitt (32) ausgerichtet ist, in eine zusammengeklappte Stellung herunter drehbar ist.

3. Ein Kraftfahrzeugsitz einstellbarer Höhe wie in Anspruch 1 oder in Anspruch 2 beansprucht, der weiterhin eine bewegliche Fußstütze (34) umfaßt.

4. Ein Kraftfahrzeugsitz einstellbarer Höhe wie in irgendeinem der Ansprüche 1 bis 3 beansprucht, der weiterhin ein Sicherheits-Rückhalteelement (40) umfaßt.

5. Ein Kraftfahrzeugsitz einstellbarer Höhe wie in Anspruch 4 beansprucht, in dem dieses Sicherheits-Rückhalteelement (40) in einen oberen Abschnitt (48) dieses Rückenlehnenabschnittes (12) einziehbar ist.

6. Ein Kraftfahrzeugsitz einstellbarer Höhe wie in irgendeinem der Ansprüche 1 bis 5 beansprucht, der weiterhin mindestens ein Unterwasser-Schutzelement (50, 52, 54) umfaßt.

7. Ein Kraftfahrzeugsitz einstellbarer Höhe wie in Anspruch 6 beansprucht, in dem dieses mindestens eine Unterwasser-Schutzelement ein innerhalb des Sitzabschnitts (14) positioniertes Unterwasser-Rohrelement (50) umfaßt.

8. Ein Kraftfahrzeugsitz einstellbarer Höhe wie in irgendeinem der Ansprüche 1 bis 7 beansprucht, in dem diese mindestens eine in eine Richtung zusammenklappbare Klammer (60) mit einer Mehrzahl von Öffnungen (66) in einem Karosserieabschnitt davon gebildet ist, um **dadurch** eine geringere Druck- als Zugfestigkeit bereitzustellen.

9. Ein Kraftfahrzeugsitz einstellbarer Höhe wie in irgendeinem der Ansprüche 1 bis 8 beansprucht, in dem dieser Sitzabschnitt (14) einen vertikalen Verstellbereich von mindestens 50 mm besitzt.

10. Ein Kraftfahrzeugsitz einstellbarer Höhe wie in irgendeinem der vorstehenden Ansprüche beansprucht, der weiterhin einen drehbar mit Gewinde versehenen Anbschnitt (22) in Verbindung (24) mit diesem Sitzabschnitt (14) umfaßt, wodurch Drehung dieses mit Gewinde versehenen Abschnitts (22) eine vertikale Verstellung dieses Sitzabschnitts (14) bewirkt.

## Revendications

1. Siège de véhicule automobile à assise réglable en hauteur (10) comprenant une partie dossier (12) et une partie assise (14) réglable verticalement par rapport à ladite partie dossier (12), comportant au moins un(e) support ou patte pliable dans une direction (60), ledit support permettant le montage de l'assise (10) sur un véhicule automobile, ledit support étant moins résistant en compression qu'en traction afin de faciliter l'absorption d'énergie par ledit support pendant le déplacement vers l'arrière (64) de ladite assise (10) en cas de collision par l'arrière tout en empêchant ladite assise de se déplacer vers l'avant (62) en cas de collision par l'avant du dit véhicule.

2. Siège de véhicule automobile à assise réglable en hauteur selon la revendication 1 dans lequel la partie assise (14) comprend une partie arrière (32) et une partie avant (34) fixée à ladite partie arrière (32) de façon à pouvoir pivoter, la partie avant (34) étant mobile en rotation vers le bas vers une position repliée à partir d'une position normale dans laquelle elle est alignée avec la partie arrière (32).

3. Siège de véhicule automobile à assise réglable en hauteur selon la revendication 1 ou la revendication 2 comprenant en outre un repose-pied mobile (34).

4. Siège de véhicule automobile à assise réglable en hauteur selon l'une des revendications 1 à 3 comprenant en outre un élément de dispositif de retenue de sécurité (40).

5. Siège de véhicule automobile à assise réglable en hauteur selon la revendication 4 dans lequel l'élément de dispositif de retenue de sécurité (40) peut se rétracter dans une partie supérieure (48) de ladite partie dossier (12).

6. Siège de véhicule automobile à assise réglable en hauteur selon l'une des revendications 1 à 5 comprenant en outre au moins un élément de protection anti-sous-marinage (50, 52, 54).

7. Siège de véhicule automobile à assise réglable en hauteur selon la revendication 6 dans lequel l'élément de protection anti-sous-marinage comprend un élément de tube anti-sous-marinage (50) positionné dans la partie assise (14).

8. Siège de véhicule automobile à assise réglable en hauteur selon l'une des revendications 1 à 7 dans lequel le corps du dit support déformable à usage unique (60) comporte une pluralité d'ouvertures (66) destinées à conférer une moindre résistance en compression qu'en traction.

9. Siège de véhicule automobile à assise réglable en hauteur selon l'une des revendications 1 à 8 dans lequel la partie assise (14) a une latitude de déplacement vertical de 50 mm au moins.

10. Siège de véhicule automobile à assise réglable en hauteur selon l'une des revendications précédentes comprenant en outre une partie filetée (22) mobile en rotation, en communication (24) avec ladite partie assise (14), la rotation de ladite partie filetée (22) produisant le déplacement vertical de ladite partie assise (14).
